# EUROPEAN PATENT SPECIFICATION

(11) **EP 1 661 771 B1**
(45) Date of publication and mention of the grant of the patent: **26.09.2007**
(21) Application number: 05024449.0
(22) Date of filing: 09.11.2005
(51) Int. Cl.: B60R 21/09, B60R 11/02, F16B 31/00

(54) **Operation panel unit**
Bedienungsfrontklappe
Façade de commande

(30) Priority: 29.11.2004 JP 2004344438
(43) Date of publication of application: 31.05.2006
(73) Proprietor: ALPS ELECTRIC CO., LTD., Tokyo 145-8501 (JP)
(72) Inventor: Sato, Takashi, Ota-ku Tokyo 145-8501 (JP)
(74) Representative: Klunker . Schmitt-Nilson . Hirsch

(56) References cited:
- EP-A- 1 248 274
- US-A1- 2004 070 947
- PATENT ABSTRACTS OF JAPAN vol. 2003, no. 12, 5 December 2003 (2003-12-05) -& JP 2004 111054 A (KENWOOD CORP), 8 April 2004 (2004-04-08)

## Description

### BACKGROUND OF THE INVENTION

### 1. Field of the Invention

The present invention relates to an operation panel unit according to the preamble of claim 1, more particularly, to an operation panel unit having an impact absorbing construction which absorbs an impact applied on the operation panel unit.

### 2. Description of the Related Art

Various electric components such as rotary switches, push button switches used for adjusting sound volume of an audio system or air volume of an air conditioner system are mounted in a vehicle, these electric components are designed to be operated as an occupant manually operates operation knobs.

Such electric components for a vehicle are mounted on a printed board inside an operation panel unit which is mounted so as to be exposed to a predetermined mounting surface such as an instrument panel. Generally, as an occupant manually operates rotary knobs or push knobs protruding from an operation surface of the operation panel unit, the above-described rotary switches and push button switches or the like are operated. In this case, the height of the rotary knobs and the push knobs protruding from the mounting surface is set relatively low in consideration of safety at the time of a collision or sudden braking of a vehicle. In general, the protrusion height of the rotary knobs and the push knobs from the mounting surface does not exceed 9.5 mm.

Conventionally, as an example of such a kind of an operation panel, an operation panel unit has been proposed (for example, see JP-A-2003-11744 (Claims 8 to 10, Figs. 9 to 11)). In the operation panel, a plurality of mounting pieces having grooves protrudes from the side surfaces of a unit main body. As the respective mounting pieces are fixed in a supporting member of a vehicle by using respective mounting screws, the unit main body is assembled so as to be exposed to a predetermined mounting surface. When the pressure over a predetermined value is applied on the unit main body after assembly, the grooves of the mounting piece are ruptured so that the unit main body is buried in a direction in which the pressure is applied.

Since the operation panel unit has the above-described construction in which a large impact on the unit main body can be absorbed, safety can be ensured at the time of a collision or sudden braking of a vehicle. However, in this case, since each of the grooves is located between the side part toward the unit main body of the support member on the rear side and the side face of the unit main body, when the pressure is applied on the unit main body while the operation panel unit is being normally operated, the grooves which are weak are bent by the pressure, whereby the unit main body is displaced in the pressure direction.

In accordance with the preamble of claim 1, EP 1 248 274 A discloses an operation panel unit.

### SUMMARY OF THE INVENTION

The object of the invention is to provide an operation panel unit, which can secure safety and prevent displacement of a unit main body during a manual operation.

In order to solve the above-mentioned problem, according to the invention, an operation panel unit includes the features of claim 1.

In the operation panel unit having the above-mentioned structure, even though the unit main body is pressed at a time when the operation parts are normally used, a portion in the groove of the mounting piece can be prevented from being bent by the contact part of the rear side supporting member, since the bottom of the weak groove crosses the contact part of the rear side supporting member which is in contact with the rear side of the mounting piece, whereby it is possible to prevent the displacement of the unit main body. In the meantime, when the pressure over a predetermined value is applied on the unit main body, the pressure works to rupture the groove. Accordingly, the groove is certainly ruptured at the time of a collision or sudden braking, thus ensuring safety.

In the operation panel unit having the above-mentioned construction, it is preferable that reinforcing plates be integrally formed with the mounting piece on the side face of the unit main body, the reinforcing plates extend in a tapered shape in protruding directions of the respective mounting pieces, and front ends of some of the reinforcing plates be located in the vicinity of the bottom of the groove. When the above construction is adopted, the strength of the mounting piece can be enhanced by the reinforcing plates. Thus, when the operation parts are normally used, the mounting piece is prevented from being deformed, whereby the displacement of the unit main body can be more reliably prevented. Moreover, the front ends of the reinforcing plates, which extend in a tapered shape in the protruding direction of the mounting piece, in the extension direction are located in the vicinity of the bottom of the groove. Therefore, when the pressure over the predetermined value is applied on the unit main body, the pressure can be concentrated on the groove. Accordingly, the groove can be more certainly ruptured at the time of a collision or sudden braking of a vehicle, whereby it is possible to ensure safety.

### BRIEF DESCRIPTION OF THE DRAWINGS

Fig. 1 is a plan view showing a state in which an operation panel according to a first embodiment of the invention is mounted on an instrument panel;
Fig. 2 is a cross-sectional view showing a state in which the operation panel unit is mounted on the instrument panel;
Fig. 3 is a cross-sectional view of the essential parts taken along the line III-III of Fig. 1;
Fig. 4 is a view taken along an arrow indicated by A; and
Fig. 5 is a cross-sectional view illustrating the essential parts of an operation panel unit according to a second embodiment of the invention.

### DESCRIPTION OF THE PREFERRED EMBODIMENT

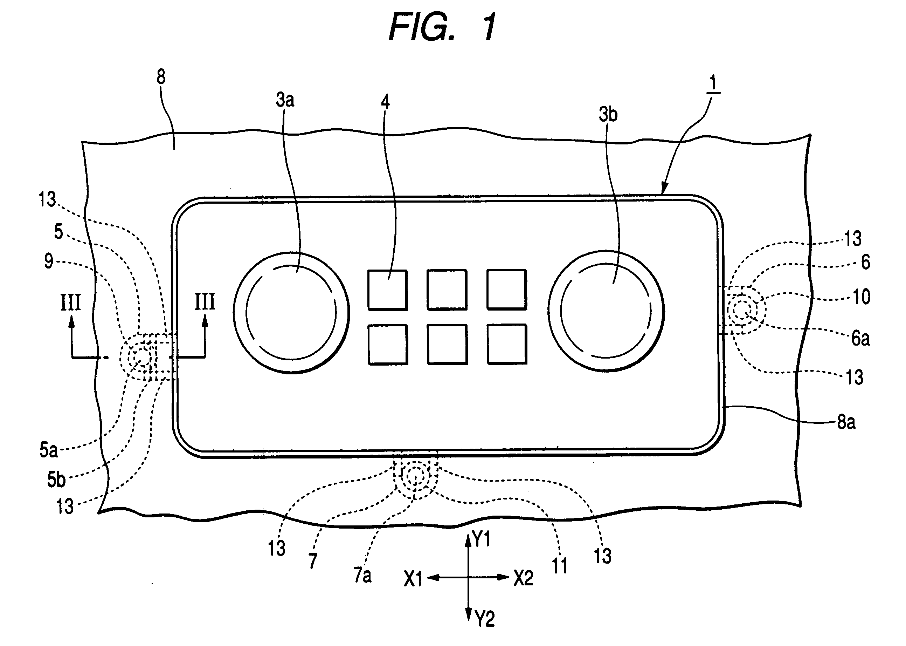

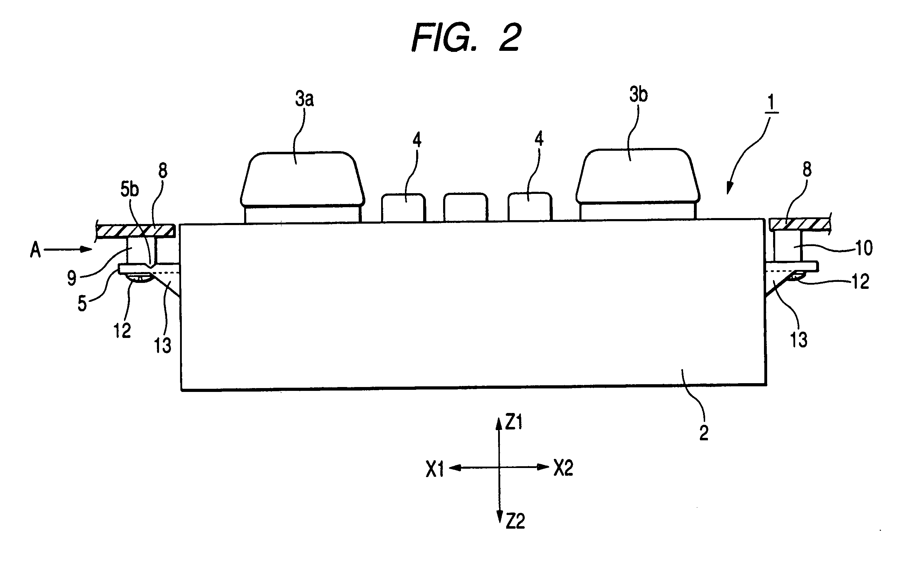

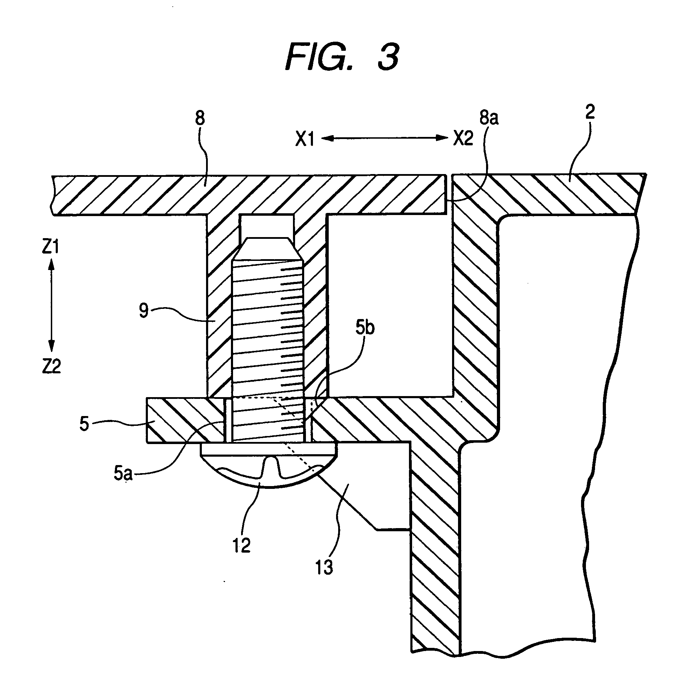

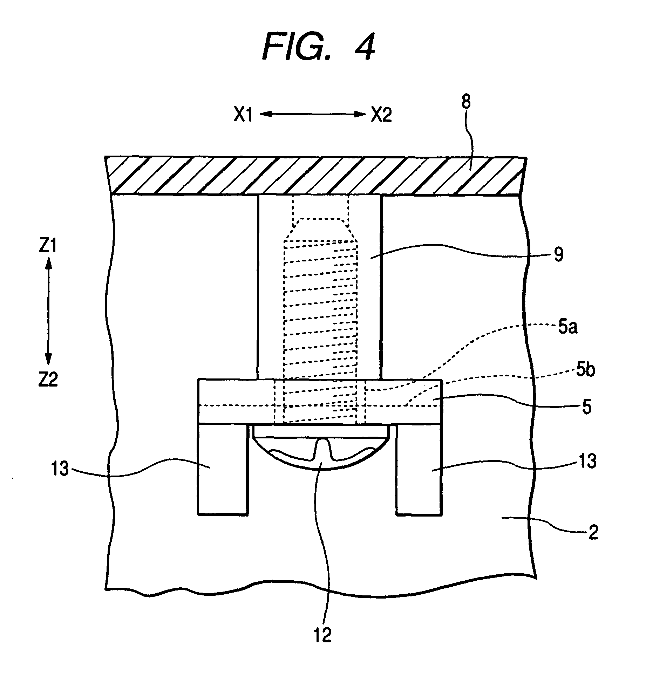

Hereinafter, an embodiment of the invention will be described with reference to the accompanying drawings. Fig. 1 is a plan view showing a state in which an operation panel according to a first embodiment of the invention is mounted on an instrument panel. Fig. 2 is a cross-sectional view showing a state in which the operation panel unit is mounted on the instrument panel. Fig. 3 is a cross-sectional view of the essential parts taken along a line III-III of Fig. 1. Fig. 4 is a view taken along an arrow indicated by A in Fig. 2. In these drawings, X1-X2 direction indicates a horizontal direction, Y1-Y2 direction indicates a vertical direction, and Z1-Z2 direction indicates forward/rearward direction.

In Figs. 1 and 2, reference numeral 1 comprehensively indicates a unit main body. The unit main body 1 includes a housing 2, a predetermined number of rotary switches and push switches (not shown), rotary knobs 3a and 3b, and push knobs 4. The housing 2 is made of a synthetic resin which is formed in a rectangular shape in a plan view, the rotary switches and push button switches are disposed in the housing 2, the rotary knobs 3a and 3b are provided to be rotatably operated with respect to the housing 2 so as to rotate the rotary switches, and the push knobs 4 are provided to be pressed with respect to the housing 2 so as to operate the push button switches. Front ends of these rotary knobs 3a and 3b and the push knobs 4 are disposed to protrude from a predetermined opening formed in a front face of the housing 2. In this case, the height of the respective knobs protruding from the front face of the housing 2 is set not to exceed a predetermined value, for example, 9.5 mm in consideration of safety at the time of a collision or sudden braking of a vehicle. In addition, mounting pieces 5, 6, and 7 are integrally formed at both sides of the housing 2 in the horizontal direction and one side of the housing 2 in a downward direction (in the Y2 direction) to protrude outward therefrom, respectively. Through holes 5a, 6a, and 7a are formed in the center portion of these mounting pieces 5, 6, and 7, respectively.

The unit main body 1 constructed as above is mounted on an instrument panel 8 in the vehicle through each of the mounting pieces 5, 6, and 7. That is, an opening 8a formed in a rectangular shape in a plan view is provided in the instrument panel 8, and bosses 9, 10, 11 (front side supporting members) corresponding to each of the mounting pieces 5, 6, and 7 protrude on the rear side of the instrument panel 8. Mounting screws (rear side supporting members) indicated by reference numeral 12 are inserted through each of the through holes 5a, 6a, and 7a of the mounting pieces 5, 6, and 7 from the rear side thereof so as to be screwed into each of the bosses 9, 10, and 11, and the mounting pieces 5, 6, and 7 are pinched by supporting members having heads of the mounting screws 12 and ends of the bosses 9, 10 and 11 and fixed therein, so that the unit main body 1 is assembled into the instrument panel 8. At this time, the front face of the housing 2 is exposed to the opening 8a of the instrument panel 8, and the front face of the housing 2 is disposed such that the front face of the housing 2 is flush with the front face of the instrument panel 8 (see Fig. 2).

Further, among the mounting pieces 5, 6, and 7 provided in the housing 2, the mounting piece 5 on the left side has a V-shaped groove 5b, which is carved on the front face of the mounting piece 5 in the vertical direction. The V-shaped groove 5b of the mounting piece 5 is located around the boss 14 toward the side of the housing 2, and the bottom of the V-shaped groove 5b crosses the head (contact part of the rear side supporting member) of the mounting screw 12, which is in contact with the rear side of the mounting piece 5. Furthermore, the left side of the housing 2 is provided with a pair of reinforcing plates 13 and 13, which is integrally formed on the rear side of the mounting piece 5 at the both edges thereof in the vertical direction. These reinforcing plates 13 and 13 extend in a tapered shape in a protruding direction of the mounting piece 5, and front ends of the reinforcing plates 13 and 13 are located in the vicinity of the bottom of the V-shaped groove 5b. In the same manner, the reinforcing plates 13 and 13 are respectively provided on the right side and the bottom side of the housing 2 so as to reinforce the mounting pieces 6 and 7 (see Figs. 1 and 2).

In the operation panel unit constructed as above, when an occupant rotates the rotary knobs 3a and 3b protruding from the front face of the housing 2 in a proper manner, the rotary switches corresponding to the rotary knobs 3a and 3b are operated in conjunction with the operated rotary knobs 3a and 3b, and then the rotary switches output pulse signals corresponding to rotation directions and rotation angles of the rotary knobs 3a and 3b. Thus, for example, temperature and air volume of an air conditioner system can be adjusted on the basis of the output signals. In addition, when an occupant presses the push knobs 4 in a proper manner, the operated push knobs 4 descend so as to press the push button switches and thus conversion signals are output from the push button switches. Therefore, for example, a power of an air conditioner system can be turned on/off and a direction of the wind of the air conditioner system can be changed on the basis of the output signals. In a normal state of an operation, since the rotary knobs 3a and 3b and the push knobs 4 remarkably protrude from the front face of the housing 2, an occupant can manually operate these knobs with their hands in an easy manner, whereby operability can be improved.

Here, when the rotary knobs 3a and 3b and the push knobs 4 are manually operated by a normal operation and the pressure is applied on the unit main body 1, the pressure on the unit main body 1 is transferred to the V-shaped groove 5b of the mounting piece 5 and works on the mounting piece 5 so that a portion in the V-shaped groove 5b is significantly bent. However, since the weak bottom of the V-shaped groove 5b crosses the head of the mounting screw 12 which is in contact with the rear side of the mounting piece 5, displacement of the mounting piece 5 is regulated at the V-shaped groove 5b by the head of the mounting screw 12. For this reason, during the normal operation, displacement of the unit main body 1 can be reliably prevented. In the meantime, when a great impact is applied on the rotary knobs 3a and 3b and the push knobs 4 so that a dynamic pressure over a predetermined value is applied on the unit main body 1, the V-shaped groove 5b of the mounting piece 5 is located around the boss 14 toward the side of the housing 2. Therefore, the pressure on the unit main body 1 efficiently functions as a tensile force, which ruptures the V-shaped groove 5b of the mounting piece 5. Accordingly, the V-shaped groove 5b is certainly ruptured at the time of a collision or sudden braking of a vehicle so that the unit main body 1 is buried in a direction in which the pressure is applied, thus ensuring safety.

In the present embodiment, a pair of the reinforcing plates 13 and 13 is respectively provided to reinforce the respective mounting pieces 5, 6, and 7, and the strength of the respective mounting pieces 5, 6, and 7 can be enhanced by the reinforcing plates 13 and 13. Thus, when the rotary knobs 3a and 3b and the push knobs 4 are normally used, the respective mounting pieces 5, 6, and 7 are prevented from being deformed, whereby the displacement of the unit main body 1 can be more reliably prevented. Moreover, front ends of the reinforcing plates 13 and 13 in an extension direction thereof are located in the vicinity of the bottom of the V-shaped groove 5b. Therefore, when the pressure over the predetermined value is applied on the unit main body 1, the pressure can be concentrated on the V-shaped groove 5b to rupture the groove. Accordingly, the V-shaped groove 5b can be more certainly ruptured at the time of a collision or sudden braking of a vehicle, whereby it is possible to ensure safety.

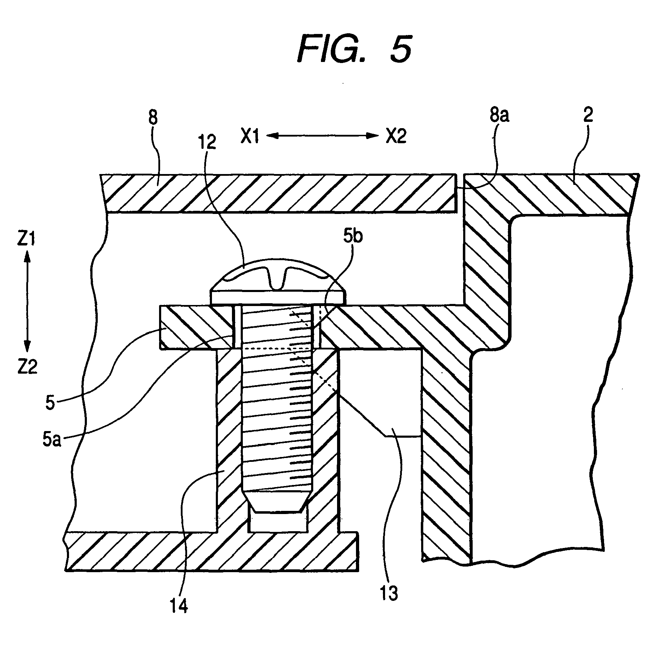

Fig. 5 is a cross-sectional view illustrating the essential parts of the operation panel unit according to a second embodiment of the invention. In Fig. 5, constituent elements corresponding to those of Figs. 1 to 4 are denoted by the same reference numerals, and detailed description thereof will be omitted.

The above-described first embodiment has the construction, in which the mounting piece 5 is fixed in a supporting member of a vehicle, the mounting screw 12 is inserted in the through hole 5a of the mounting piece 5 from the rear side thereof and screwed into the boss 9 of the instrument panel 8 located on the front side so that the mounting piece 5 is fixed by the boss 9. Contrary to the construction, as shown in Fig. 5, in the second embodiment, a boss 14 serving as a rear side supporting member in a vehicle is provided to protrude in the forward direction, the mounting screw 12 is inserted into the through hole 5a of the mounting piece 5 from the front side thereof and screwed into the boss 14 located on the rear side so that the mounting piece 5 is fixed by the boss 14. Other mounting pieces 6 and 7 have the same fixed construction as well. Further, in the present embodiment, the V-shaped groove 5b of the mounting piece 5 is located around the boss 14 toward the side of the housing 2, and the bottom of the V-shaped groove 5b crosses a front end of the boss 14, which is in contact with the rear side of the mounting piece 5. Furthermore, in the second embodiment, an end of the boss 14 serves as a contact part of the rear side supporting member, and the head of the mounting screw 12 serves as the front side supporting member.

The operation panel unit having the above construction can obtain the same effect as that of the first embodiment. However, in the present embodiment, when the unit main body 1 is assembled into the instrument panel 8 by using the mounting screw 12, the mounting screw 12 is screwed from the front side of the instrument panel 8, whereby it is possible to improve work efficiency.

In the respective embodiments, although the groove 5b is formed in a V-shape on the mounting piece 5, the shape of the groove is not limited thereto, for example, the groove may be formed in another shape such as a U-shape.

In the respective embodiments, the invention is applied to the operation panel unit for adjusting an air conditioner system. However, the application of the invention is not limited thereto, and for example, the application of the invention may be applied to an operation panel for adjusting electric equipment on a vehicle such as an audio system.

In the operation panel unit according to the invention, even though the unit main body is pressed at the time when the operation parts are normally used, a portion in the groove of the mounting piece can be prevented from being bent by the contact part of the rear side supporting member, since the weak bottom of the groove crosses the contact part of the rear side supporting member which is in contact with the rear side of the mounting piece. Accordingly, the displacement of the unit main body can be prevented. In addition, when the pressure over a predetermined value is applied on the unit main body, the pressure on the unit main body efficiently ruptures the groove. Accordingly, the groove is certainly ruptured at the time of a collision or sudden braking, whereby it is possible to ensure safety.

## Claims

1. An operation panel unit comprising:
a unit main body (1) to be mounted in a vehicle, said vehicle having a front side supporting member (9), said unit main body (1) having a front face with operation parts (3a, 3b and 4) to be exposed to an interior of the vehicle;
a rear side supporting member (12); and
a mounting piece (5) which protrudes from a side face of the unit main body (1) and has a groove (5b), the mounting piece (5) to be pinched by said front side supporting member (9) and said rear side supporting member (12) so as to be fixed, and the groove (5b) being ruptured at the time when the pressure over a predetermined value is applied on the unit main body (1) so that the unit main body (1) can be buried in a direction in which the pressure is applied,
**characterized in that** the bottom of the groove (5b) crosses a contact part of the rear side supporting member (12), when said rear side supporting member (12) is in the mounted state in contact with the rear side of the mounting piece (5).

2. The operation panel unit according to claim 1,
**characterized in that** reinforcing plates (13) are integrally formed with the mounting piece (5) on the side face of the unit main body (1), the reinforcing plates (13) extend in a tapered shape in the protruding direction of the respective mounting piece (5), and front ends of some of the reinforcing plates (13) are located in the vicinity of the bottom of the groove (5b).

## Patentansprüche

1. Bedienungsfeldeinheit, aufweisend:
einen Vorrichtungshauptkörper (1) zur Anbringung in einem Fahrzeug, wobei das Fahrzeug ein vorderseitiges Abstützelement (9) aufweist und der Vorrichtungshauptkörper (1) eine Vorderseite mit Betätigungsteilen (3a, 3b und 4) aufweist, die zum Innenraum des Fahrzeugs hin frei liegen;
ein rückseitiges Abstützelement (12); und
ein Befestigungsstück (5), das von einer Seitenfläche des Vorrichtungshauptkörpers (1) weg ragt und eine Nut (5b) aufweist, wobei das Befestigungsstück (5) durch das vorderseitige Abstützelement (9) und das rückseitige Abstützelement (12) derart einzuklemmen ist, dass es festgelegt ist, und wobei die Nut (5b) bricht, wenn ein einen vorbestimmten Wert übersteigender Druck auf den Vorrichtungshauptkörper (1) aufgebracht wird, so dass der Vorrichtungshauptkörper (1) in einer Richtung versenkt werden kann, in der der Druck aufgebracht wird,
**dadurch gekennzeichnet, dass** der Boden der Nut (5b) einen Kontaktteil des rückseitigen Abstützelements (12) kreuzt, wenn das rückseitige Abstützelement im Befestigungszustand mit der Rückseite des Befestigungsstücks (5) in Kontakt ist.

2. Bedienungsfeldeinheit nach Anspruch 1,
**dadurch gekennzeichnet, dass** Verstärkungsplatten (13) in integraler Weise mit dem Befestigungsstück (5) an der Seitenfläche des Vorrichtungskörpers (1) ausgebildet sind, wobei die Verstärkungsplatten (13) mit einer abgeschrägten Formgebung in der vorstehenden Richtung des jeweiligen Befestigungsstücks (5) verlaufen und sich vordere Enden von einigen der Verstärkungsplatten (13) in der Nähe des Bodens der Nut (5b) befinden.

## Revendications

1. Unité de panneau de commande comprenant :
un corps principal d'unité (1) destiné à être monté dans un véhicule, ledit véhicule comportant un élément support du côté avant (9), ledit corps principal d'unité (1) ayant une face avant avec des éléments fonctionnels (3a, 3b et 4) destinés à être exposés vers l'intérieur du véhicule ;
un élément support du côté arrière (12) ; et
une pièce de montage (5) faisant saillie depuis une face latérale du corps principal d'unité (1) et comportant une gorge (5b), la pièce de montage (5) étant destinée à être pincée par ledit élément support de face avant (9) et ledit élément support de face arrière (12) pour être fixée, et la gorge (5b) étant rompue au moment où une pression supérieure à une valeur prédéterminée est appliquée sur le corps principal d'unité (1) de telle sorte à pouvoir noyer le corps principal d'unité (1) dans la direction dans laquelle est appliquée la pression,
**caractérisée en ce que** le fond de la gorge (5b) croise une partie de contact de l'élément support de face arrière (12) lorsque ledit élément support de face arrière (12) est dans l'état monté en contact avec la face arrière de la pièce de montage (5).

2. Unité de panneau de commande selon la revendication 1,
**caractérisée en ce que** des plaques de renfort (13) sont formées d'un seul tenant avec la pièce de montage (5) sur la face latérale du corps principal d'unité (1), la plaque de renfort (13) s'étend sous forme effilée dans la direction en saillie de la pièce de montage respective (5), et les extrémités avant de certaines des plaques de renfort (13) sont situées au voisinage du fond de la gorge (5b).
